# EUROPEAN PATENT SPECIFICATION

(11) **EP 0 995 594 B1**
(45) Date of publication and mention of the grant of the patent: **26.03.2003**
(21) Application number: 99120288.8
(22) Date of filing: 11.10.1999
(51) Int. Cl.: B32B 31/12, B32B 31/18, B65H 29/66, B21D 43/28, E04C 2/292

(54) **Method for continuous manufacture of sandwich panels and plant for implementing the method**
Verfahren zum kontinuierlichen Herstellen von Sandwichplatten und Anlage zur Durchführung des Verfahrens
Procédé pour la fabrication continue de panneaux sandwich et installation pour la mise en oeuvre du procédé

(30) Priority: 22.10.1998 IT VE980043
(43) Date of publication of application: 26.04.2000
(73) Proprietor: S.T.A.M., Società Trevigiana Attrezzature Meccaniche SpA, 31050 Ponzano Veneto (IT)
(72) Inventor: Sacca', Luigi, c/o S.T.A.M. SpA, 31050 Ponzano Veneto (IT)
(74) Representative: Piovesana, Paolo

(56) References cited:
- IE-A- 970 382
- US-A- 3 693 966
- US-A- 4 727 784

## Description

This invention relates to a method for the continuous manufacture of sandwich panels and a plant for implementing the method.

Composite deep-ribbed thermoinsulating panels or sandwich panels are known comprising two metal shells and an insulating layer interposed between the two shells.

The two shells are preferably constructed of coated or non-coated galvanized steel, aluminium, copper or stainless steel sheet, the insulating layer being formed from polyurethane foam, polystyrene or mineral wool. They are mainly used in the building filed, both for roofing and for walls.

A method for the continuous manufacture of said panels is known in which two sheet metal webs are passed through suitable forming machines which give them their required shape, in particular by forming longitudinal stiffening ribs. The webs are then advanced in such a manner as to be maintained at a distance apart corresponding to the thickness of the panel to be formed, the insulating material being fed between these. The continuous panel formed in this manner is passed through a cutting station in which it is reduced to finished panels of the required length.

This known type of procedure has however proved susceptible to improvement if forming roofing panels in which one of the shells is to be of greater length than the other panel shell, to hence form a surmounting "lip", projecting from the insulating layer, which is to superposed on the adjacent panel during installation in order to create roof continuity.

In one such procedure, at the exit of the double web press, the metal sheets are subjected to the action of a floating cutting unit consisting of a number of circular saws which cut the continuous panel to form an individual panel from which a portion of the upper shell and of the insulating layer between the two upper cuts is removed.

This known procedure has however certain drawbacks, and in particular:
- laborious operation requiring a two or three blade cutting device,
- the need to manually remove the unwanted part of the insulation and web, giving rise to the problem of working off line,
- pollution problems due to the disposal of the unused discarded part of the insulation and web,
- the need to treat the surmountable region with adhesive film or other chemical agents to prevent the internal insulation sticking to the shell and becoming difficult to remove from it.

To obviate these drawbacks a procedure has been proposed in which a plurality of already shaped shells of length equal to the panel to be formed, ie including the surmounting lip, are firstly arranged off line. These shells are then loaded onto a roller table one behind the other such that the following shell becomes superposed on the preceding shell by a distance equal to the length of the lip, and is then joined to this by adhesive tape.

The "continuous" shell obtained in this manner is fed to the forming line in a position below the upper forming line to form a continuous panel, as in the preceding case.

After the panel has passed through the pressing station, it is subjected to the action of a cutting unit which cuts only the upper shell and the internal insulation, the lower "continuous" shell being separated by merely tearing off the adhesive tape.

A drawback of this known method is that it requires a separate additional forming line to prepare the already cut shells, or alternatively requires these to be acquired separately.

A further drawback is that the line width is greater as a space has to be provided for parking the packs of already cut shells.

IE-A-970382 describes a method for manufacturing an insulating panel provided with a surmounting lip comprising the steps of applying a coding means to a preset location of a first skin, conveying the first skin along a flat bed with the outer surface of the skin lowermost, profiling the first skin, cutting it into individual sheets and overlapping them, applying a jointing tape on the joints between the overlapped sheets of the first skin, applying liquid insulating foam reactants onto the first skin, leading a second skin continuously over the first skin to form an assembly, heating the assembly in an oven to allow the liquid foam reactants to expand to form an insulating core between the skins, detecting the coding means and, in accordance with the coding means, cutting the second skin and foam core.

IE-A-970382 also describes a plant for manufacturing an insulating panel provided with a surmounting lip comprising means for applying a reflective tape to a preset location of a first skin, conveying means for conveying the first skin along a flat bed with the outer surface of the skin lowermost, profiling means for profiling the first skin, means for cutting a leading first skin to desired length, means for laying a following first skin adjacent to the leading first skin to form an overlapping joint, means for applying a jointing tape to the joint adjacent first skins in accordance with the location of the tape, foam applicator means for applying liquid insulating foam reactants onto the first skin, means for leading a second skin continuously over the first skin to form an assembly, an oven for heating the assembly to allow the liquid foam reactants to expand to form an insulating core between the skins, detecting means for detecting the location of the reflective tape and cutting means for cutting the second skin and foam core through to the first skin in accordance with the location of the tape.

The object of the invention is to provide a method and a plant which enable panels provided with a surmounting lip to be constructed in a simple and comfortable manner.

Such an object is attained according to the invention through a method for the continuous manufacture of sandwich panels as described in claim 1 and a plant as claimed in calim 5.

A preferred embodiment of the invention is described in detail hereinafter with reference to the accompanying drawings, in which:
- Figure 1: is a schematic side view of a plant for implementing the method of the invention,
- Figure 2: is a side view of the cutting/line-up machine,
- Figure 3: is a cross-section through the line-up machine,
- Figure 4a, 4b, 4c: show schematically the cutting, surmounting and joining of the shaped sheets, and
- Figure 5: is a schematic perspective view of a panel obtained by the method of the invention.

As can be seen from the figures, the panel manufacturing method of the invention comprises two forming lines P, P', each comprising a reel 2 from which the sheet metal coil unwinds to form the lower shell 6 and upper shell 4 respectively (in which "lower" and "upper' relate to the line).

The upper forming line P comprises, as stated, and unwinding reel 2, a forming machine 8 and a roller table 10.

The lower forming line P' comprises an unwinding reel for feeding the sheet metal coil, a forming machine 12 which forms deep ribs on the web, a cutting/joining 14, followed by a roller table 16 feeding a continuous press 18.

At the exit of the continuous press 18 there is provided a floating cutting unit followed by a roller table 22.

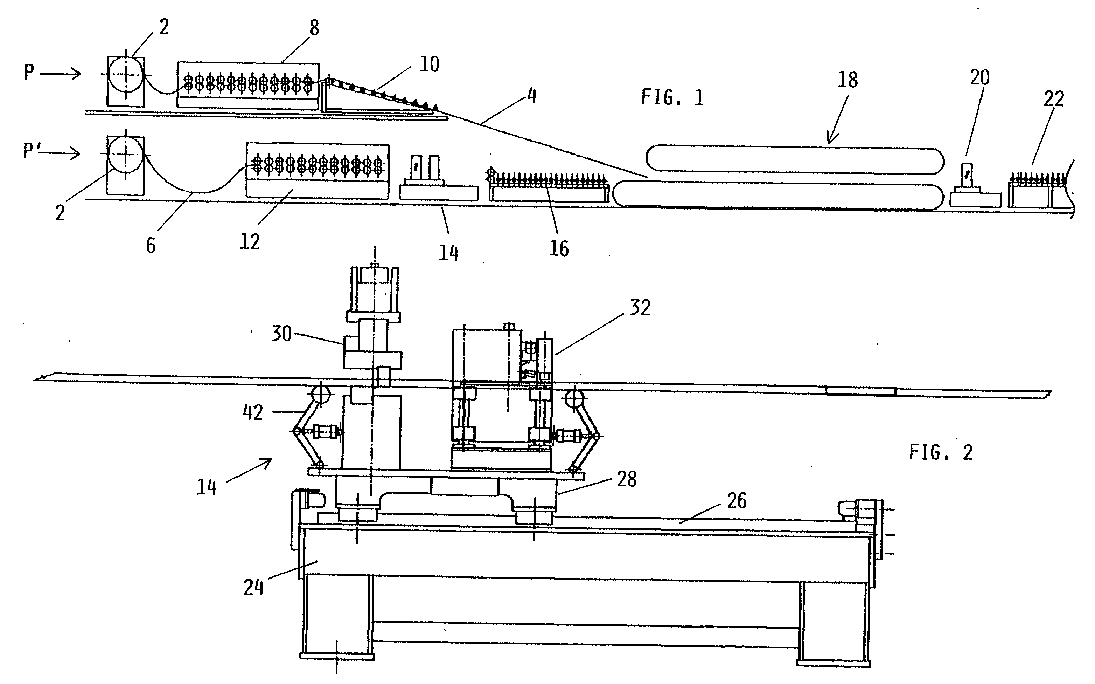

The cutting/joining unit (see Figure 2) comprises a bed 24 provided with slide guides 26 for a carriage 28 supporting a cutter 30 and a line-up and joining device 32. The cutter 30 can be hydraulically, pneumatically or mechanically operated and makes the cut with or without removing the scrap.

The line-up and joining device consists of a plurality of vertically movable fingers 34 which press against an adhesive tape 36 advancing transversely to the direction of advancement of the shaped sheets and fed from a reel 38 by being dragged by a gripper 40.

The invention uses a plurality of control members, limit switches, activators and actuators, which are known to the expert of the art and will therefore not be mentioned during the course of the following description of operation.

The described operation of the plant according to the invention is limited to the lower forming line P', the operation of the upper line P being conventional.

The lower web 6 unwound from the reel 2 is passed through the forming machine 12 and is driven by this through the dies of the cutter 30. During this stage the support carriage 28 is accelerated under the control of a motor numerically controlled on the basis of the length of the piece to be cut, such that at the moment of cutting, the cutter 30 has a speed equal to the speed of advancement v₁ of the advancing web.

When the cut has been made a lifter device 42, for example of hydraulic cylinder-piston type, acts on the front end of the advancing web thrust by the forming machine 12, after which said forming machine 12 is made to accelerate so that said front end 13 becomes partially superposed on the rear end 15 of the previously cut web by a length equal to the length of the surmounting lip defined for the already cut panel.

In a modified embodiment (not shown on the drawings) said front end is inserted below the rear end of the cut web.

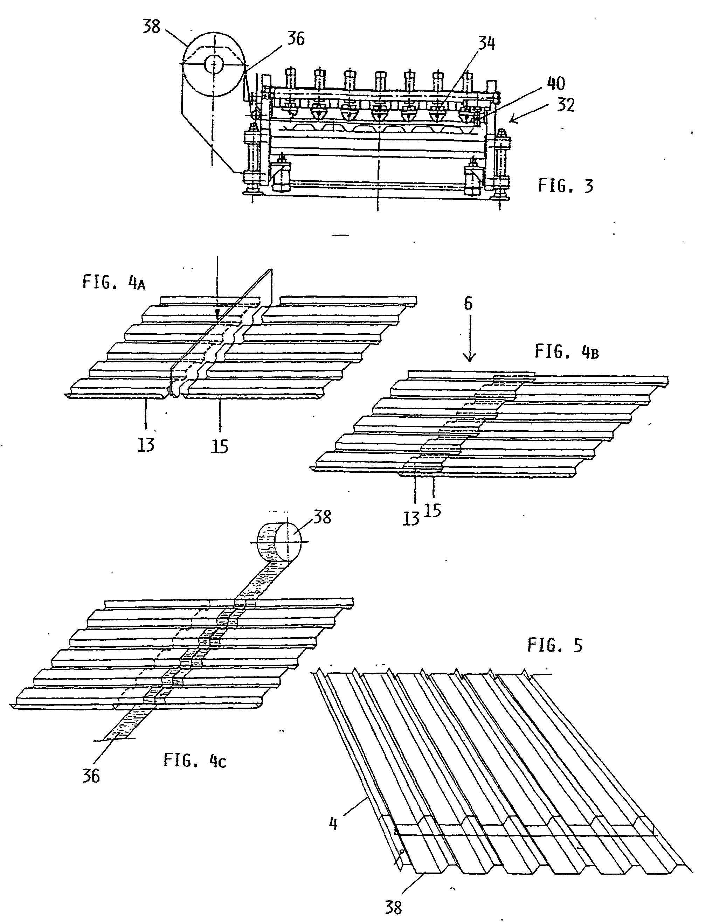

Having achieved superposing, the control system causes the forming machine 12 to return to its initial speed v₁ so that the two web pieces, superposed at their contacting ends, advance at this speed (Figure 4b).

Simultaneously, the numerically controlled motor sets the speed of the carriage 28 such that the joining device becomes synchronized with the line speed v₁ at the moment in which it reaches the superposed edge.

The fingers 34 are then lowered to cause the tape 36 to join together the two previously separated parts 13,15 (Figure 4c).

The carriage is then returned to its initial position for a new working cycle.

The upper web 4 and the "continuous" lower web 6 are then fed to the belt-type pressing station 18 where the insulating material is inserted, and then to the cutting station 20 where a circular or floating band saw moving at the same speed v₁ as the continuous panel cuts the upper web 4 and the underlying layer of insulating material.

The cut panel is fed to the accelerating roller table 22 which tears away the adhesive tape 36 to hence separate the preceding panel from the next panel and display the lip 38 of one of them.

The cutting stage is facilitated by the presence of a marker which during the joining stage is applied to the later surmounting part of the ribs at a constant distance from the joining line.

In this manner an optical reader detects the presence of this marker during the cutting stage and feeds a signal for synchronizing the cutter speed with the speed of the web in order to make the cut in the required position.

From the aforegoing it is apparent that the method of the invention has numerous advantages, and in particular:
- it can be applied to existing machines by modifying only the lower forming line,
- it does not require special cutting devices,
- it can also construct traditional panels by eliminating the metal web acceleration stage,
- it eliminates pollution problems as there is no material to be discarded,
- the manual work associated with such an operation is hence not required,
- the use of a cutter instead of a traditional saw gives greater protection to the cutting region, hence preventing oxidation,
- the use of adhesives of anti-adhesive products on the surmounting region of the shaped sheet is not required,
- it has a line size comparable to that of a panel line with two forming machines.

## Claims

1. A method for the continuous manufacture of sandwich panels provided with a surmounting lip, comprising the following stages:
- advancing at the same speed a first (6) and a second (4) web of shaped metal sheet intended to form respectively the outer and inner shell of a continuous panel, while causing them to approach each other until at a distance apart corresponding to the final thickness of said panel to be obtained,
- inserting a layer of insulating material between the two approaching webs,
- simultaneously feeding the two webs into a moving press (18) to determine a controlled thickness of the continuous panel,
- cutting the continuous panel to size to obtain finished panels of the desired length,
also comprising the following stages:
- before its entry into the moving press (18), transversely cutting at least one of the sheet metal webs,
- lifting a portion of said one of the sheet metal webs
- accelerating that portion of this web driven by the corresponding forming machine (12) such that its front end (13) and that portion (15) previously separated during the cutting stage become partially superposed to form a transverse superposing band,
- returning the portion of the web driven by the corresponding forming machine (12) to the initial speed,
- securing said superposing band,
and then
- at the exit of the pressing station cutting the other sheet metal web in correspondence with the band formed by the two superposed metal sheets, and cutting the insulating material,
- detaching the panel from the forming line to obtain a panel provided with a longitudinally projecting appendix (38) corresponding to the superposing band.

2. A method as claimed in claim 1 **characterised in that** the front end is superposed on the previously separated portion.

3. A method as claimed in claim 1, **characterised by** securing the superposing band by means of adhesive tape.

4. A method as claimed in claim 1, **characterised in that** during the joining stage an optically readable reference marker is applied to synchronize the cutting unit advancement speed with the panel speed.

5. A plant for implementing the method claimed in claims 1 to 4, comprising:
- two superposed forming lines (P,P') for two sheet metal webs (4,6),
- an insertion station for insulating material,
- a pressing station (18),
- a final panel cutting station (20),
also comprising, upstream of the insulating material insertion station:
- a unit (30) for cutting one (6) of the sheet metal webs,
- superposing means for the front end (13) of the web on the previously separated portion (15) to form a horizontal band, said superposing means consisting of the actual forming machine (12) by which said web is fed and a vertical pusher (42) for a portion of the sheet metal web,
- accelerating means for said forming machine (12),
- a securing unit (32) for said superposed band.

6. A plant as claimed in claim 5, **characterised by** comprising an optical reader which senses the presence of a reference marker on the web in order to feed a command for synchronizing the web speed and cutter speed.

## Patentansprüche

1. Verfahren für die kontinuierliche Herstellung von Sandwichplatten bzw. Verbundplatten, die mit einer übersteigenden Lippe versehen sind, das die folgenden Stufen aufweist:
- ein Vorrücken mit derselben Geschwindigkeit einer ersten (6) und einer zweiten (4) Bahn von einem geformten Blech, wobei beabsichtigt ist, jeweils die äußere und innere Hülle von einer kontinuierlichen Platte zu formen, während bewirkt wird, sie einander anzunähern bis zu einem Abstand auseinander entsprechend zu der Enddicke der zu erhaltenden Platte,
- das Einsetzen einer Schicht von Isolationsmaterial zwischen die zwei sich nähernden Bahnen,
- das gleichzeitige Zuführen der zwei Bahnen in eine bewegliche Presse (18), um eine gesteuerte Dicke der kontinuierlichen Platte zu bestimmen,
- das Schneiden der kontinuierlichen Platte auf ein Maß, um fertiggestellte Platten von der gewünschten Länge zu erhalten,
ferner weist es die folgenden Stufen auf:
- vor seinem Eintritt in die bewegliche Presse (18) wird zumindest eine der Blechbahnen quer geschnitten,
- das Heben eines Abschnittes von einer der Blechbahnen
- das Beschleunigen des Abschnittes von dieser Bahn, der durch die entsprechende Umformmaschine (12) getrieben wird, so dass ihr vorderes Ende (13) und jener Abschnitt (15), der vorher während der Schneidstufe getrennt wurde, teilweise überlagert wird, um ein quer überlagerndes Band zu bilden,
- das Zurückkehren des Abschnittes des Bandes, das durch die entsprechende Umformmaschine (12) getrieben wird, zu der Anfangsgeschwindigkeit,
- das Befestigen des überlagernden Bandes,
und dann
- an dem Austritt der Preßstation das Schneiden der anderen Blechbahn in Übereinstimmung mit dem Band, das durch die zwei überlagernden Bleche gebildet wird, und das Schneiden des Isolationsmaterials,
- das Ablösen der Platte von der Umformanlage, um eine Platte zu erhalten, die mit einem der Länge nach vorstehenden Fortsatz (38) entsprechend zu dem überlagernden Band versehen ist.

2. Verfahren wie in Anspruch 1 beansprucht, **dadurch gekennzeichnet, dass** das vordere Ende an dem vorherigen getrennten Abschnitt überlagert wird.

3. Verfahren wie in Anspruch 1 beansprucht, **gekennzeichnet durch** das Befestigen des überlagernden Bandes mittels eines Klebebandes.

4. Verfahren wie in Anspruch 1 beansprucht, **dadurch gekennzeichnet, dass** während der Verbindungsstufe ein optisch lesbares Bezugskennzeichen angewendet wird, um die Schneideinheitvorrückgeschwindigkeit mit der Plattengeschwindigkeit zu synchronisieren.

5. Anlage zum Ausführen des Verfahrens, beansprucht in den Ansprüchen 1 bis 4, die aufweist:
- zwei überlagernde Umformanlagen (P, P') für zwei Blechbahnen (4, 6),
- eine Einsetzstation für das Isolationsmaterial,
- eine Preßstation (18),
- eine Endplattenschneidstation (20),
die stromaufwärts der Isolationsmaterialeinsetzstation ferner aufweist:
- eine Einheit (30) zum Schneiden einer (6) der Blechbahnen,
- eine Überlagerungseinrichtung für das vordere Ende (13) der Bahn an dem bisher getrennten Abschnitt (15), um ein horizontales Band zu bilden, wobei die Überlagerungseinrichtung aus der eigentlichen Umformmaschine (12), durch die die Bahn zugeführt wird und einem vertikalen Schieber (42) für einen Abschnitt der Blechbahn besteht,
- eine Beschleunigungseinrichtung für die Umformmaschine (12)
- eine Befestigungseinheit (32) für das überlagerte Band.

6. Anlage wie in Anspruch 5 beansprucht, **gekennzeichnet durch** das Aufweisen eines optischen Lesers, der das Vorhandensein von einem Bezugskennzeichen an der Bahn abtastet, um einen Befehl zum Synchronisieren der Bahngeschwindigkeit und der Schneideinrichtungsgeschwindigkeit zuzuführen.

## Revendications

1. Procédé pour la fabrication continue de panneaux sandwichs munis d'un rebord surhaussé, comprenant les étapes suivantes :
- faire avancer à la même vitesse une première bande (6) et une deuxième bande (4) de tôle formée destinées à former respectivement les parements interne et externe d'un panneau continu, de manière à les approcher l'un de l'autre jusqu'à une distance correspondant à l'épaisseur finale dudit panneau à obtenir,
- insérer une couche de matériau isolant entre les deux bandes s'approchant,
- introduire simultanément les deux bandes dans une presse mobile (18) pour déterminer une épaisseur contrôlée du panneau continu,
- couper le panneau continu à la taille pour obtenir des panneaux finis à la longueur désirée,
comprenant également les étapes suivantes :
- avant son introduction dans la presse mobile (18), couper transversalement au moins l'une des bandes de tôle,
- lever une portion de ladite une des bandes de tôle,
- accélérer cette portion de cette bande entraînée par la machine de formage correspondante (12) de sorte que son extrémité avant (13) et cette portion (15) précédemment séparées pendant l'étape de coupe deviennent partiellement superposées pour former une bande de superposition transversale,
- retourner la portion de la bande entraînée par la machine de formage correspondante (12) à la vitesse initiale,
- fixer ladite bande de superposition,
et puis
- à la sortie du poste de presse, couper l'autre bande de tôle en correspondance avec la bande formée par les deux tôles superposées, et couper la matière isolante,
- détacher le panneau de la ligne de formage pour obtenir un panneau muni d'un appendice saillant longitudinalement (38) correspondant à la bande de superposition.

2. Procédé comme revendiqué dans la revendication 1, **caractérisé en ce que** l'extrémité avant est superposée sur la portion séparée précédemment.

3. Procédé comme revendiqué dans la revendication 1, **caractérisé par** la fixation de la bande de superposition au moyen d'un ruban adhésif.

4. Procédé comme revendiqué dans la revendication 1, **caractérisé en ce que** pendant l'étape d'assemblage un marqueur de référence lisible optiquement est appliqué pour synchroniser la vitesse d'avance de l'unité de coupe avec la vitesse des panneaux.

5. Installation pour mettre en oeuvre le procédé revendiqué dans les revendications 1 à 4, comprenant
- deux lignes de formage superposées (P, P') pour des bandes de tôle (4, 6),
- un poste d'insertion de matériau isolant,
- un poste de presse (18),
- un poste de coupe de panneaux final (20),
comprenant également, en amont du poste d'insertion de matériau isolant :
- une unité (30) pour couper l'une (6) des bandes de tôle,
- un moyen de superposition pour l'extrémité avant (13) de la bande sur la portion séparée précédemment (15) pour former une bande horizontale, ledit moyen de superposition consistant en l'actuel machine de formage (12) par laquelle ladite bande est introduite et un poussoir vertical (42) pour une portion de la bande de tôle,
- un moyen d'accélération pour la machine de formage (12),
- une unité de fixation (32) pour ladite bande superposée.

6. Installation comme revendiquée dans la revendication 5, **caractérisée en ce qu'**elle comprend un lecteur optique qui capte la présence d'un marqueur de référence sur la bande afin de fournir une commande pour synchroniser la vitesse de bande et la vitesse de couteau.
